# FASCICULE DE BREVET EUROPEEN

(11) **EP 0 886 712 B1**
(45) Date de publication et mention de la délivrance du brevet: **12.06.2002**
(21) Numéro de dépôt: 97914399.7
(22) Date de dépôt: 14.03.1997
(51) Int. Cl.: E05D 11/00, F16C 11/04

(54) **CHARNIERE, DONT LA POSITION D'OUVERTURE PUISSE ETRE DEPASSEE ELASTIQUEMENT, ET LUNETTES POURVUES D'UNE TELLE CHARNIERE**
SCHARNIER MIT ELASTISCH ÜBERDEHNBAREM OFFENANSCHLAG SOWIE EINE EIN DERARTIGES SCHARNIER UMFASSENDE BRILLE
HINGE WHOSE OPEN POSITION CAN BE EXCEEDED ELASTICALLY AND EYEGLASSES EQUIPPED WITH SUCH A HINGE

(30) Priorité: 15.03.1996 FR 9603271
(43) Date de publication de la demande: 30.12.1998
(73) Titulaire: Chene, Richard, 92200 Neuilly-sur-Seine (FR); Delamour, Dominique, 78490 Les Mesnuls (FR); Rodi, Olivier, 78650 Saulx-Marchais (FR)
(72) Inventeur: Chene, Richard, 92200 Neuilly-sur-Seine (FR); Delamour, Dominique, 78490 Les Mesnuls (FR); Rodi, Olivier, 78650 Saulx-Marchais (FR)
(74) Mandataire: Sauvage, Renée
(86) Numéro de dépôt international: FR9700460
(87) Numéro de publication internationale: WO9735085

(56) Documents cités:
- EP-A- 0 689 634
- WO-A-92/15916
- US-A- 5 394 297

## Description

La présente invention concerne un dispositif de protection et de guidage d'un composant allongé, tel qu'un brin ou un tube, associé, au niveau de l'articulation, à deux éléments rigides articulés l'un à l'autre, ainsi que des applications industrielles de ce dispositif.

Précisément, l'invention concerne un tel dispositif dans lequel lesdits éléments rigides sont reliés l'un à l'autre par une articulation extensible leur permettant d'occuper diverses positions angulaires relatives, et dans lequel ledit composant allongé est disposé dans l'enfilade de deux canaux en vis-à-vis ménagés, respectivement, dans lesdits éléments rigides, ledit composant allongé étant constitué soit par un matériau ayant des propriétés élastiques, soit par un matériau souple non élastique associé à une pièce élastique, et étant destiné à maintenir lesdits éléments rigides l'un contre l'autre.

De nombreux domaines techniques utilisent des articulations destinées à permettre à deux éléments rigides de pivoter autour d'au moins un point de pivotement et d'occuper ainsi différentes positions angulaires relatives. Ces articulations peuvent revêtir la forme, par exemple, de charnières métalliques, d'articulations extensibles, de rotules, de cardans, etc. Dans certaines applications, il pourra être nécessaire d'établir également entre les éléments rigides une liaison de type électrique, hydraulique, pneumatique, optique ou mécanique, par exemple, afin de transmettre une commande, un signal, une énergie, un effort ou une information quelconque d'un élément rigide à l'autre. Ainsi, dans l'industrie automobile, il est parfois souhaitable de faire passer des câbles électriques entre le dormant de caisse d'un véhicule et la portière articulée à celui-ci, pour alimenter un moteur agissant sur l'orientation des rétroviseurs extérieurs en réponse à une commande exercée depuis l'intérieur. Or, il est bien entendu que ces câbles électriques ne doivent ni entraver le bon fonctionnement de l'articulation, ni risquer d'être endommagés par celui-ci.

Dans les systèmes de l'art antérieur, le passage de tels câbles ou autres composants allongés, d'un élément rigide à l'autre, se fait généralement de deux manières : le passage direct au travers de la charnière, ou le passage au travers d'un soufflet indépendant de l'articulation.

Un tel passage direct est illustré par la demande de brevet internationale WO 92/15916 qui divulgue une charnière extensible ou élastique comprenant deux éléments rigides qui ont des faces d'appui complémentaires et sont susceptibles de pivoter l'un par rapport à l'autre autour d'un axe de rotation réel ou imaginaire. Un passage destiné à recevoir une extrémité d'un élément de connexion élastique allongé, adapté à transmettre un effort, est ménagé dans chacun des deux éléments rigides. Un autre exemple de charnière élastique est divulgué dans la demande de brevet européenne n° 0 689 634 au nom de Chene et al, dans laquelle on retrouve les caractéristiques générales précitées. L'inconvénient de ces systèmes est qu'ils nécessitent que les surfaces des charnières en contact avec le composant allongé soient parfaitement polies et exemptes d'arêtes vives, de façon à éviter une usure prématurée dudit composant. Cela implique de mettre en oeuvre des opérations coûteuses et complexes qui affectent les coûts de fabrication de ces articulations.

Dans les systèmes de l'art antérieur à soufflet, le soufflet permet de protéger dans une certaine mesure le composant allongé, mais on a toutefois constaté que cette protection était insuffisante dans la mesure où les risques de pincement, de cisaillement et de coupure dudit composant ne sont pas négligeables. Il s'agit en outre d'une technique relativement contraignante, dans la mesure où l'utilisation d'un soufflet nécessite, d'une part, d'effectuer un certain nombre de perçages permettant sa fixation aux deux éléments rigides et, d'autre part, d'ajuster le degré maximal de dilatation du soufflet à l'angle d'ouverture maximal de l'articulation.

L'invention permet de remédier aux inconvénients précités de l'art antérieur en ce sens qu'elle propose un dispositif de protection et de guidage d'un composant allongé, ayant la forme d'un organe mobile disposé entre les éléments rigides de l'articulation, lequel organe est mobile en rotation et en translation dans un plan parallèle à un plan de rotation de ladite articulation et présente un passage recevant ledit composant allongé.

Un organe mobile du type général précité, mais qui n'est toutefois pas mobile en translation, est connu de US-A-5 394 297 qui divulgue un manchon rotatif prévu à l'articulation entre un écran et un clavier d'ordinateur portable.

En outre, selon la présente invention, le passage ménagé dans l'organe mobile a sensiblement la forme d'une partie intérieure de tore, de section transversale circulaire ou elliptique, dont les cercles méridiens ont un rayon qui est au plus égal au rayon de courbure minimal du composant allongé au voisinage des extrémités ouvertes dudit passage.

L'organe mobile selon l'invention a pour fonction de guider le composant allongé, par exemple pour éviter qu'il interfère avec une charnière éventuellement adjacente ou, dans les charnières extensibles, pour orienter l'effort transmis. De plus, sa mobilité en rotation lui permet de se positionner par rapport au composant allongé, ce qui résulte en une meilleure maîtrise du rayon de courbure du composant allongé au voisinage de l'organe mobile et réduit en conséquence la probabilité que ledit composant présente des coudes non souhaitables le long de sa longueur.

En outre, afin d'éviter toute usure du composant allongé au contact des parois internes dudit organe mobile, ledit organe devra être constitué d'un matériau offrant une rugosité minimale, tel qu'une céramique, un métal poli, etc.

De préférence, l'organe mobile est libre de se mouvoir dans deux plans orthogonaux dont chacun est parallèle à un plan de rotation de ladite articulation.

Avantageusement, les canaux ménagés dans les deux éléments rigides débouchent chacun dans une cavité formée dans les extrémités desdits éléments rigides, cavités qui sont en vis-à-vis l'une de l'autre, et lesdites extrémités ont des formes appariées, de sorte que, lorsque lesdits éléments rigides sont mis en prise l'un avec l'autre, les formes appariées de leurs extrémités coopérant mutuellement, ledit organe mobile est adapté à être reçu dans lesdites extrémités. Il est ainsi possible de conférer auxdits éléments rigides une position angulaire relative stable. D'autres telles positions pourront être obtenues, par exemple, en prévoyant que les extrémités desdits éléments rigides ont une configuration créant un effet de came lors du déplacement angulaire relatif desdits éléments dans un plan de rotation de l'articulation.

En outre, l'un au moins des éléments rigides peut être pourvu de moyens formant butée qui limitent les déplacements angulaires relatifs desdits éléments dans au moins un plan de rotation de ladite articulation, par exemple jusqu'à une position angulaire relative instable.

Le composant allongé peut être plein ou creux. Il peut s'agir d'un brin ou d'un tube composé d'un matériau souple non élastique associé à au moins une pièce élastique, telle qu'un ressort hélicoïdal, ledit brin ou tube étant immobilisé par des pièces d'arrêt prévues respectivement dans chacun desdits éléments rigides. Selon une autre possibilité, il peut s'agir d'un brin élastique ayant ses extrémités ancrées respectivement dans chacun desdits éléments rigides. Ainsi, le composant allongé peut notamment revêtir la forme d'un fil, d'un câble, d'un tuyau et analogue, qui peut être tressé, torsadé, toroné et/ou gainé. Les moyens de transmission tubulaires sont adaptés à établir, par exemple, une liaison électrique, hydraulique, pneumatique ou optique, tandis que les composants allongés sous forme de brin permettent de transmettre un effort mécanique, par exemple un effort élastique, d'un élément rigide à l'autre.

Compte tenu de ce qui précède, on comprend bien que la charnière selon l'invention constitue une articulation ayant un point de pivotement immatériel résultant de la mise en appui de faces de contact.

L'invention étend aussi sa portée à des applications industrielles préférées du dispositif précité. Ainsi, l'invention concerne également une monture de lunettes incorporant un tel dispositif, dans laquelle, par exemple, les éléments rigides font respectivement partie intégrante d'une branche et d'une face de monture de lunettes. Dans une autre application, le dispositif selon l'invention est intégré à une charnière pour porte. Par exemple, les éléments rigides font respectivement partie intégrante d'une portière et d'un dormant de caisse de véhicule.

On notera toutefois que l'invention trouve également son application dans bien d'autres domaines techniques, par exemple dans la réalisation d'articulations de prothèses et d'éléments de robots industriels, sans que ces applications soient limitatives. De plus, il est bien évident que dans toutes ces utilisations, les éléments rigides peuvent soit être d'un seul tenant avec les parties de l'objet qui sont articulées l'une par rapport à l'autre, soit être montés sur, ou dans, celles-ci.

L'invention sera mieux comprise à la lumière de la description détaillée suivante de modes de réalisation non limitatifs de l'invention, prise en combinaison avec les dessins annexés dans lesquels :
la figure 1 est une vue en perspective éclatée d'une forme d'exécution du dispositif selon l'invention, appliqué à une articulation extensible ;
la figure 2 est une vue en perspective, partiellement en coupe, du dispositif de la figure 1 appliqué à une charnière de lunettes, en position ouverte normale, c'est-à-dire à 90°, de la branche ;
la figure 3 est une vue en élévation du dessus du dispositif de la figure 2 ;
la figure 4 est une vue en perspective du dispositif de la figure 2, en position fermée de la branche ;
la figure 5 est une vue en perspective du dispositif de la figure 2, dans une première position d'ouverture outrepassée de la branche ; et
la figure 6 est une vue en perspective du dispositif de la figure 2, dans une seconde position d'ouverture outrepassée de la branche.

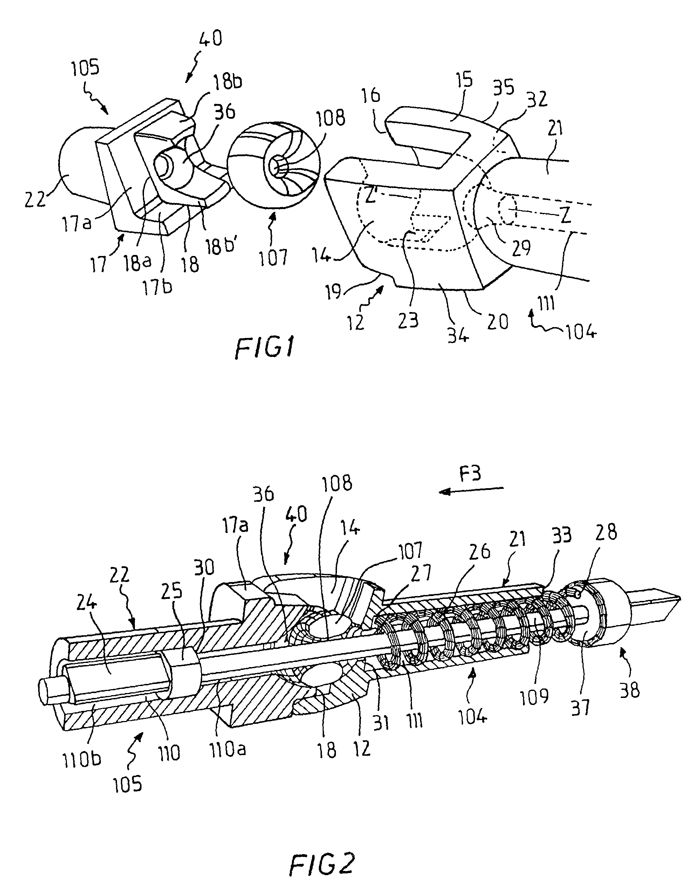

La figure 1 représente une forme d'exécution du dispositif selon l'invention appliqué à une articulation extensible. Dans la suite, on qualifiera de "distale" une partie de pièce qui est plus éloignée de l'organe mobile que ne l'est une autre partie de pièce qualifiée, elle, de "proximale".

Le dispositif illustré est appliqué à une articulation entre un premier élément rigide 104 et un second élément rigide 105.

Précisément, sur cette figure, l'élément rigide 104 comporte une partie distale 21 de section cylindrique et une partie proximale 12. La partie proximale 12 a grossièrement la forme d'un parallélépipède, la section transversale de ladite partie proximale 12 étant de plus grandes dimensions que celle de la partie distale 21. Toutefois, il est bien évident que les parties proximale 12 et distale 21 de l'élément 104 pourraient avoir une configuration générale et des dimensions, en section transversale, similaires. Une cavité 14 sensiblement cylindrique est ménagée dans la partie proximale 12, l'axe principal Z-Z' de ladite cavité étant sensiblement aligné avec l'axe longitudinal de la partie distale 21. La cavité 14 débouche à la fois sur la face supérieure 15 dudit parallélépipède et sur sa face latérale 16 opposée à la partie distale 21. La cavité 14 forme un étranglement 29 à la jonction entre la partie distale 21 et la partie proximale 12 de l'élément 104, lequel étranglement 29 débouche dans un canal longitudinal 111 ménagé dans l'épaisseur de la partie distale 21 de l'élément 104.

De son côté, l'élément rigide 105 a également une partie distale 22 de forme généralement cylindrique et une partie proximale 40. La partie proximale 40 comporte deux parties, l'une en L désignée par 17 et l'autre en U désignée par 18.

Plus précisément, la partie 17 qui a de plus grandes dimensions que ladite partie distale 22, a, de profil, la forme d'un "L" dont la barre verticale (telle qu'observée sur la figure 1) est constituée d'une paroi principale 17a rectangulaire, faisant suite à la surface radiale de la partie distale 22, et dont la barre horizontale est formée d'une paroi secondaire 17b rectangulaire, orthogonale à la paroi principale 17a et ayant un bord longitudinal commun avec celle-ci.

La partie 18 forme cuvette et elle a, de profil, la forme d'un U à base 18a plane et dont les ailes sont désignées par 18b et 18b'. La face extérieure des ailes 18b et 18b' est plane. La base 18a, ou fond rectangulaire de la cuvette 18, constitue un prolongement de la paroi principale 17a, tandis que l'aile 18b' de la cuvette constitue un prolongement de la paroi secondaire 17b, ladite aile 18b' se projetant depuis ladite paroi secondaire. La cuvette 18 délimite une cavité 36 à fond ouvert.

Comme on le voit à la figure 2, un canal longitudinal 110, présentant une zone proximale 110a et une zone distale 110b de plus grand diamètre, est ménagé dans l'élément rigide 105 et, à son émergence de la paroi principale 17a de la partie proximale 17, il débouche dans la cuvette 18.

Si on revient à la figure 1, les éléments rigides 104 et 105 sont adaptés à venir en prise mutuelle, la paroi secondaire 17b de la partie proximale 40 coopérant avec une découpe 19 pratiquée dans la face inférieure 20 de la partie proximale 12, tandis que la partie de l'aile 18b' de la cuvette 18 qui se projette au-delà de la paroi secondaire 17b est appropriée à être reçue dans un évidement 23 prévu dans la face latérale 16 de la partie proximale 12.

Le dispositif selon l'invention comprend un organe mobile 107, qui a la forme extérieure d'une ellipsoïde et dans lequel est ménagé un passage 108 qui a sensiblement la forme d'une partie intérieure de tore.

Comme on le voit sur la figure 2, lorsque les parties proximales 12 et 40 appariées des éléments rigides 104 et 105 sont en prise mutuelle, l'organe mobile 107 est susceptible d'être reçu en partie dans la cavité 36 de la cuvette 18 dépendant de l'élément 105 et en partie dans la cavité cylindrique 14 de l'élément 104, et le passage 108 formé au travers de l'élément 107 est adapté à être aligné avec les canaux longitudinaux 111 et 110 ménagés dans les éléments rigides 104 et 105. Un composant allongé 109 est placé dans l'enfilade du canal longitudinal 110 ménagé dans l'élément rigide 105, de la cavité 36 formée à l'extrémité dudit élément, du passage 108 de l'organe mobile 107, de l'étranglement 29 formé dans l'élément rigide 104 et du canal longitudinal 111 ménagé dans ledit élément.

Bien que, dans la forme d'exécution représentée à la figure 2, l'organe mobile 107 soit en contact avec les parois internes de la cuvette 18, il est bien entendu que l'on pourra, si on le souhaite, prévoir un jeu entre eux. On notera également que, dans une autre position angulaire relative des éléments rigides 104 et 105, l'organe mobile 107 pourra se trouver à l'extérieur des cavités 14 et 36, ou qu'il pourra être entièrement contenu dans la cavité 14.

Si l'on se réfère plus précisément à la figure 2 qui illustre un dispositif selon l'invention appliqué à une articulation extensible de monture de lunettes, en position ouverte normale de la branche, on voit que le composant allongé 109 à protéger est constitué d'un brin souple associé à un ressort 26. Le brin 109, qui est non élastique, est tendu. Les extrémités du brin 109 sont serties dans, ou autrement immobilisées par, des pièces d'arrêt 24 et 38. La pièce d'arrêt 24 présente une portion élargie 25 susceptible de prendre appui sur un épaulement 30 ménagé à l'extrémité proximale de la zone distale 110b du canal 110. La pièce d'arrêt 38 présente une surface 37 formant butée de fin de course susceptible de venir en appui contre l'extrémité libre 33 de la partie distale 21 de l'élément 104. L'extrémité distale 28 du ressort 26 prend appui sur la surface 37 de la pièce d'arrêt 38 et l'autre extrémité 27 du ressort vient buter contre un épaulement 31 ménagé à l'extrémité proximale du canal 111.

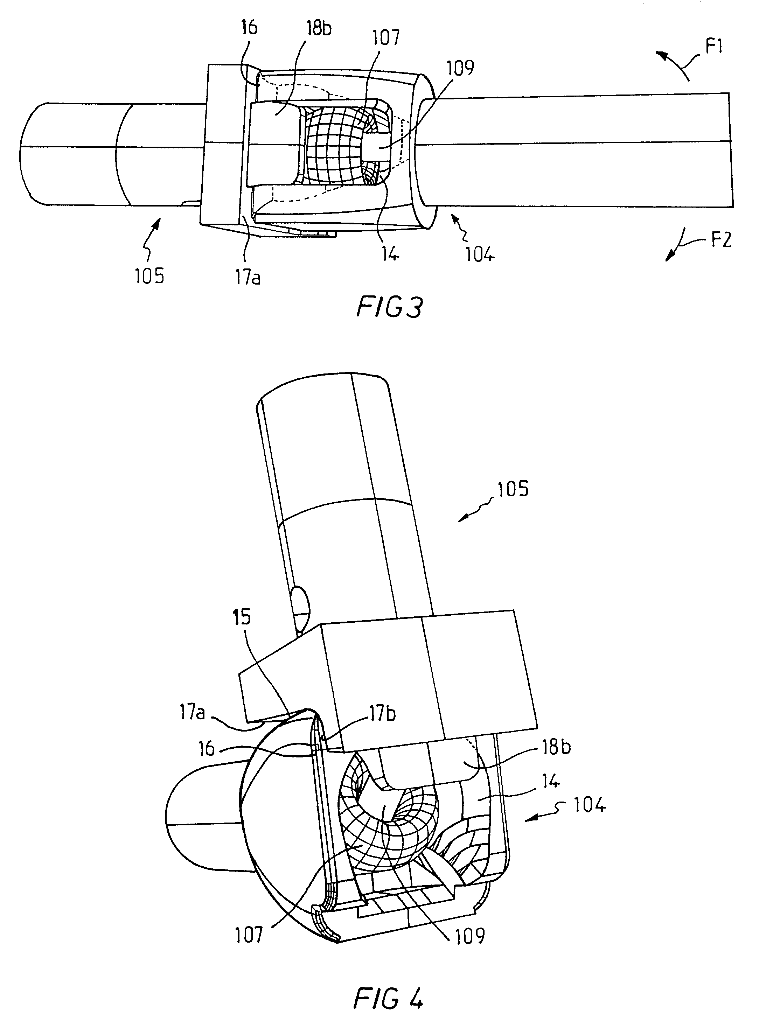

Le fonctionnement de l'articulation de monture de lunettes précédemment décrite sera maintenant expliqué par référence aux figures 3 à 6. Dans la suite de la description, on supposera que l'élément 104 fait partie d'une branche de lunettes et que l'élément 105 appartient à une face de monture de lunettes, bien que l'invention s'applique également à la situation inverse, ainsi qu'à toute forme d'utilisation d'une charnière extensible.

La figure 3 montre l'articulation en position ouverte normale de la branche, correspondant à la position représentée à la figure 2. On observe que, lorsque les éléments rigides 104 et 105 sont alignés et en prise l'un avec l'autre, l'aile 18b de la cuvette 18 fait saillie dans la cavité 14 ménagée dans l'élément rigide 104, partiellement au-dessus de l'organe mobile 107. Lorsque l'on souhaite faire passer la branche de lunettes en position fermée, illustrée sur la figure 4, on fait pivoter l'élément 104 par rapport à l'élément 105, dans le sens de la flèche F1 (figure 3). Au cours de cette rotation, l'extrémité supérieure de la face latérale 16 de l'élément 104 est guidée le long de la paroi principale 17a de l'élément 105, jusqu'à ce qu'elle bute contre la paroi secondaire 17b et que la face supérieure 15 de l'élément 104 soit en butée contre la paroi principale 17a de l'élément 105 (figure 4). L'aile 18b de la cuvette 18 fait alors saillie dans la cavité 14 de l'élément 104, où elle se trouve en butée contre la paroi interne 32 (figure 1) dudit élément. En ce qui concerne le travail du ressort 26 (figure 2) au cours de la rotation précitée de l'articulation, on notera que, dans un premier temps, le brin 109, qui n'est pas élastique, est sollicité en traction, de sorte qu'un supplément apparent de longueur doit lui être fourni par le ressort 26, ce qui s'opère par compression dudit ressort. En se comprimant, le ressort 26 permet en effet au brin 109 de coulisser dans la direction de la flèche F3 (figure 2). La compression du ressort 26 est limitée par la venue en butée de l'élément d'arrêt 38 contre la paroi d'extrémité 33 (figure 2) de la partie distale 21. L'effet de came produit par les surfaces des éléments rigides 104 et 105 conduit ensuite à une réduction de la sollicitation exercée sur le brin 109 qui a à parcourir un chemin plus court, réduction qui est en outre rendue possible par le pivotement et le déplacement de l'organe mobile 107 dans le plan de l'articulation, tout au long de la rotation, jusqu'à former un angle d'environ 45° par rapport aux axes longitudinaux des éléments rigides 104 et 105. L'excès apparent de longueur du brin 109 est donc absorbé par une dilatation correspondante du ressort 26, qui tend ainsi à revenir à sa position de repos.

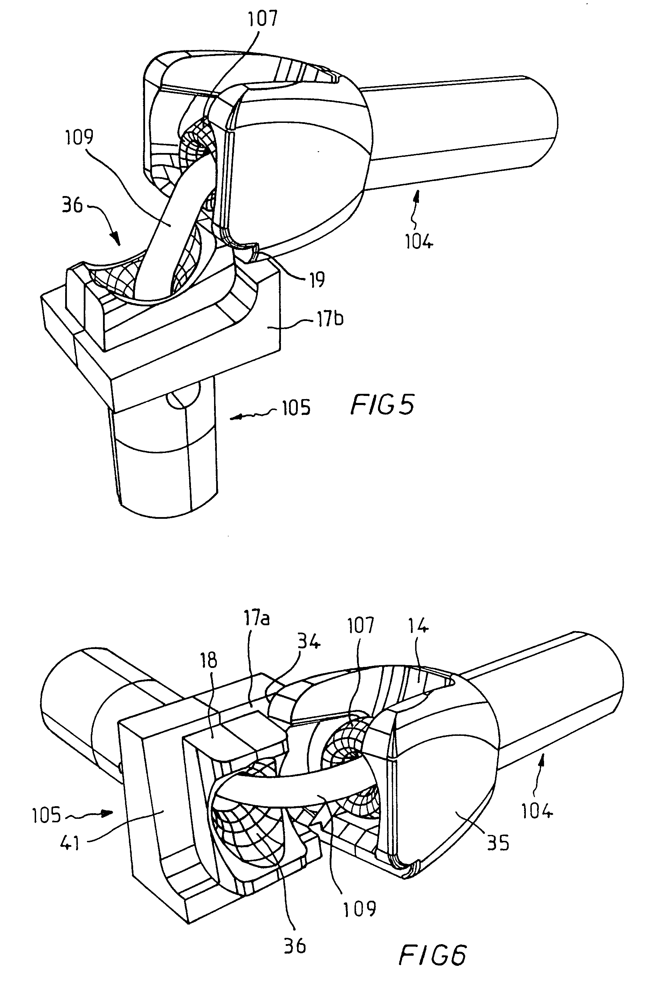

Si l'on souhaite à présent faire pivoter l'articulation depuis la position illustrée à la figure 3 jusqu'à la position représentée à la figure 5, dans laquelle la branche de lunettes, à laquelle est associé l'élément rigide 104, est en une position d'ouverture outrepassée de 90° par rapport à la position d'ouverture normale, dans le plan de rotation normal de l'articulation, c'est-à-dire que la branche est en une position d'ouverture de 180°, il suffit d'imprimer à l'élément rigide 104 une rotation de 90° suivant F2 (figure 3) par rapport à l'élément rigide 105. Lors de cette rotation, l'extrémité libre de la paroi secondaire 17b de l'élément 105 qui, en position d'ouverture normale, était en butée contre la découpe 19 ménagée dans l'élément 104, pivote de 90° le long de ladite découpe 19, jusqu'à ce que la paroi secondaire 17b et la découpe 19 viennent en butée l'une contre l'autre, dans une seconde position de butée, comme illustré à la figure 5.

La figure 6 illustre une autre position d'ouverture outrepassée de la branche de lunettes, dans laquelle les éléments rigides 104 et 105 forment un angle relatif de 90° dans le plan perpendiculaire à la fois au plan normal de rotation de l'articulation et au plan des verres de lunettes. La face latérale 34 de l'élément rigide 104 est en butée contre une partie de la paroi principale 17a de l'élément 105 qui est adjacente à un bord longitudinal du fond de la cuvette 18. Dans cette position, la branche de lunettes a pivoté de 90° vers le bas par rapport à la position illustrée à la figure 3. Toutefois, il est bien évident qu'une position d'ouverture outrepassée correspondant à un pivotement de 90° vers le haut pourra également être obtenue, dans laquelle la face latérale 35 de l'élément 104 viendra en butée contre une autre partie, 41, de la paroi principale 17a qui est adjacente à l'autre bord longitudinal du fond de la cuvette 18.

Dans les positions illustrées sur les figures 5 et 6, le brin 109 a été sollicité en traction de façon croissante, de sorte que le ressort 26 s'est comprimé de façon correspondante, jusqu'à ce que l'élément d'arrêt 38 vienne en butée contre la paroi d'extrémité 33 (figure 2). Par suite, le ressort a tendance à se dilater pour regagner sa position de repos ; les éléments rigides 104 et 105 occupent donc une position angulaire relative instable.

Bien que, sur les figures 5 et 6, l'organe mobile 107 soit contenu dans la cavité 14 ménagée dans l'élément rigide 104, on notera qu'il pourrait tout aussi bien se trouver en un emplacement quelconque le long du trajet du composant allongé, entre les éléments rigides 104 et 105, dans la mesure où il est susceptible de se déplacer dans le plan de rotation de l'articulation, le but principal de l'invention étant d'assurer un guidage et une protection efficaces du composant allongé lors du fonctionnement de l'articulation et d'orienter l'effort élastique transmis, et ce, jusqu'à des positions d'ouverture outrepassée de l'articulation pouvant aller, comme on l'a vu précédemment, jusqu'à 90° ou plus dans deux plans de rotation orthogonaux.

## Revendications

1. Charnière comprenant :
deux éléments rigides (104,105) reliés l'un à l'autre par une articulation extensible leur permettant d'occuper diverses positions angulaires relatives, et
un composant allongé (109) constitué par un brin ou un tube de section transversale sensiblement cylindrique disposé dans l'enfilade de deux canaux (111,110) en vis-à-vis ménagés, respectivement, dans lesdits éléments rigides (104,105), ledit composant allongé (109) étant constitué soit par un matériau ayant des propriétés élastiques, soit par un matériau souple non élastique associé à une pièce élastique, et étant destiné à maintenir lesdits éléments rigides l'un contre l'autre,
**caractérisée en ce qu'**elle comprend en outre un dispositif de protection et de guidage (107) dudit composant allongé, ayant la forme d'un organe mobile disposé entre lesdits éléments rigides (104,105), lequel organe est mobile en rotation et en translation dans un plan parallèle à un plan de rotation de ladite articulation et présente un passage (108) recevant ledit composant allongé (109),
et **en ce que** ledit passage (108) a sensiblement la forme d'une partie intérieure de tore, de section transversale circulaire ou elliptique, dont les cercles méridiens ont un rayon qui est au plus égal au rayon de courbure minimal du composant allongé (109) au voisinage des extrémités ouvertes dudit passage (108).

2. Charnière selon la revendication 1, **caractérisée en ce que** ledit organe mobile (107) est libre de se mouvoir dans deux plans orthogonaux dont chacun est parallèle à un plan de rotation de ladite articulation.

3. Charnière selon la revendication 1 ou 2, **caractérisée en ce que** lesdits canaux (110,111) débouchent chacun dans une cavité (14,36) formée dans les extrémités (12,40) desdits éléments rigides (104,105), lesdites cavités (14,36) étant en vis-à-vis l'une de l'autre, et **en ce que** lesdites extrémités (12,40) ont des formes appariées (19,23,17b,18b'), de sorte que, lorsque lesdits éléments rigides (104,105) sont mis en prise l'un avec l'autre, les formes appariées (19,23,17b,18b') de leurs extrémités (12,40) coopérant mutuellement, ledit organe mobile (107) est adapté à être reçu dans lesdites extrémités (12,40).

4. Charnière selon la revendication 3, **caractérisée en ce que** les extrémités (12,40) desdits éléments rigides (104,105) ont une configuration créant un effet de came lors du déplacement angulaire relatif desdits éléments (104,105) dans un plan de rotation de l'articulation.

5. Charnière selon l'une quelconque des revendications précédentes, **caractérisée en ce que** l'un au moins desdits éléments rigides (104,105) est pourvu de moyens formant butée qui limitent les déplacements angulaires relatifs desdits éléments (104,105) dans au moins un plan de rotation de ladite articulation.

6. Charnière selon l'une quelconque des revendications précédentes, **caractérisée en ce que** ledit composant allongé (109) est un brin élastique ayant ses extrémités ancrées respectivement dans chacun desdits éléments rigides (104,105).

7. Charnière selon l'une quelconque des revendications 1 à 5, **caractérisée en ce que** ledit composant allongé (109) est un brin ou un tube composé d'un matériau souple non élastique associé à au moins une pièce élastique (26), et **en ce que** ledit brin ou tube est immobilisé par des pièces d'arrêt (24,38) prévues respectivement dans chacun desdits éléments rigides (104,105).

8. Charnière selon l'une quelconque des revendications précédentes, **caractérisée en ce que** lesdits éléments rigides (104,105) sont réunis par une liaison mécanique, électrique, hydraulique, pneumatique ou optique.

9. Charnière selon l'une quelconque des revendications précédentes, **caractérisée en ce que** lesdits éléments rigides (104,105) font respectivement partie intégrante d'une branche et d'une face de monture de lunettes.

10. Charnière selon l'une quelconque des revendications 1 à 8, **caractérisée en ce que** lesdits éléments rigides (104,105) font respectivement partie intégrante d'une portière et d'un dormant de caisse de véhicule.

11. Monture de lunettes incorporant une charnière selon l'une quelconque des revendications 1 à 9.

## Claims

1. Hinge comprising :
two rigid elements (104, 105) connected to each other by an extensible joint enabling them to occupy different relative angular positions, and
an elongate component (109) consisting of a filament or a tube having a substantially cylindrical cross-section, laid along two successive channels (111, 110) positioned end-to-end and formed one in each of the said rigid elements (104, 105), said elongate component (109) consisting of a material having elastic properties or of an inelastic flexible material associated with an elastic part, which component is intended to maintain said rigid elements in abutting relation
**characterized in that** it further comprises, situated between the said rigid elements (104, 105), a protecting and guiding device (107) for said elongate component, which device is movable in rotation and translation in a plane parallel to a rotation plane of the said joint and that contains a passage (108) suitable for accommodating the said elongate component (109),
and **in that** the said passage (108) is shaped essentially like the inner part of a torus, of circular or elliptical cross-section, the meridian circles of which have a radius that is at most equal to the minimum radius of curvature of the elongate component (109) in the vicinity of the open ends of the said passage (108).

2. Hinge according to claim 1, **characterized in that** the said movable element (107) is free to move in two orthogonal planes each of which is parallel to a plane of rotation of the said joint.

3. Hinge according to claim 1 or 2, **characterized in that** the said channels (110, 111) each open into a cavity (14, 36) formed in the ends (12, 40) of the said rigid elements (104, 105), the said cavities (14, 36) being opposite each other, and **in that** the said ends (12, 40) have mating forms (19, 23, 17b, 18b') so that, when the said rigid elements (104, 105) are engaged with each other, with the mating forms (19, 23, 17b, 18b') of their ends (12, 40) fitted together, the said movable member (107) fits inside the said ends (12, 40).

4. Hinge according to claim 3, **characterized in that** the ends (12, 40) of the said rigid elements (104, 105) are so configured as to produce a cam action during the relative angular movement of the said elements (104, 105) in a plane of rotation of the joint.

5. Hinge according to any one of the preceding claims, **characterized in that** at least one of the said rigid elements (104, 105) is provided with stop means that limit the relative angular movements of the said elements (104, 105) in at least one plane of rotation of the said joint.

6. Hinge according to any one of the preceding claims, **characterized in that** the said elongate component (109) is an elastic filament, each of whose ends is anchored in one of the said rigid elements (104, 105).

7. Hinge according to any one of claims 1 to 5, **characterized in that** the said elongate component (109) is a filament or a tube composed of an inelastic flexible material associated with at least one elastic part (26), and **in that** the said filament or tube is immobilised by stop parts (24, 38) provided one in each of the said rigid elements (104, 105).

8. Hinge according to any one of the preceding claims, **characterized in that** the said rigid elements (104, 105) are connected by a mechanical, electrical, hydraulic, pneumatic or optical connection.

9. Hinge according to any one of the preceding claims, **characterized in that** the said rigid elements (104, 105) are respective integral parts of a spectacle frame temple and a spectacle frame front.

10. Hinge according to any one of claims 1 to 8, **characterized in that** the said rigid elements (104, 105) are respective integral parts vehicle door and doorframe.

11. Spectacle frame incorporating a hinge according to any one of claims 1 to 9.

## Patentansprüche

1. Scharnier, umfassend:
zwei starre Elemente (104, 105), die miteinander durch ein dehnbares Gelenk verbunden sind, das ihnen gestattet, verschiedene Winkelstellungen zueinander einzunehmen, und
ein langgestrecktes Bauteil (109), das aus einem Strang oder Rohr mit im wesentlichen zylindrischem Querschnitt besteht und in einer Reihe von zwei einander gegenüberstehenden Kanälen (111, 110) angeordnet ist, die jeweils in den starren Elementen (104, 105) vorgesehen sind, wobei das langgestreckte Bauteil (109) entweder aus einem Werkstoff mit elastischen Eigenschaften oder aus einem biegsamen, nichtelastischen Werkstoff, dem ein elastisches Teil zugeordnet ist, besteht und dazu bestimmt ist, die starren Elemente aneinander zu halten,
**dadurch gekennzeichnet, dass** es außerdem eine Vorrichtung (107) zum Schutz und zur Führung des langgestreckten Bauteils umfasst, das die Form eines zwischen den starren Elementen (104, 105) angeordneten beweglichen Organs hat, das in einer zu einer Rotationsebene des Gelenks parallelen Ebene dreh- und translationsbeweglich ist und einen das langgestreckte Bauteil (109) aufnehmenden Durchgang (108) aufweist,
und dass dieser Durchgang (108) im wesentlichen die Form eines inneren Torusteils mit kreisförmigem oder elliptischem Querschnitt hat, dessen Meridiankreise einen Radius haben, der höchstens gleich dem kleinsten Krümmungsradius des langgestreckten Bauteils (109) in Nähe der offenen Enden des Durchgangs (108) ist.

2. Scharnier nach Anspruch 1, **dadurch gekennzeichnet, dass** das bewegliche Teil (107) sich in zwei zueinander senkrechten Ebenen frei bewegen kann, deren jede parallel zu einer Rotationsebene des Gelenks ist.

3. Scharnier nach Anspruch 1 oder 2, **dadurch gekennzeichnet, dass** die Kanäle (110, 111) jeweils in einen Hohlraum (14, 36) münden, der in den Enden (12, 40) der starren Elemente (104, 105) geformt ist, wobei die Hohlräume (14, 36) einander gegenüberstehen, und dass die Enden (12, 40) einander zugeordnete Formen (19, 23, 17b, 18b') haben, so dass, wenn die starren Elemente (104, 105) miteinander in Eingriff gebracht sind, wobei die zugeordneten Formen (19, 23, 17b, 18b') ihrer Enden (12, 40) gegenseitig zusammenwirken, das bewegliche Organ (107) dafür ausgelegt ist, in diesen Enden (12, 40) aufgenommen zu werden.

4. Scharnier nach Anspruch 3, **dadurch gekennzeichnet, dass** die Enden (12, 40) dieser starren Elemente (104, 105) eine Konfiguration besitzen, die bei der Relativwinkelbewegung der Elemente (104, 105) in einer Rotationsebene des Gelenks einen Nockeneffekt erzeugt.

5. Scharnier nach einem der vorhergehenden Ansprüche, **dadurch gekennzeichnet, dass** mindestens eines der starren Elemente (104, 105) mit einen Anschlag bildenden Mitteln versehen ist, die die Relativwinkelbewegungen dieser Elemente (104, 105) in mindestens einer Drehebene des Gelenks begrenzen.

6. Scharnier nach einem der vorhergehenden Ansprüche, **dadurch gekennzeichnet, dass** das langgestreckte Bauteil (109) ein elastischer Strang ist, dessen Enden jeweils in jedem der starren Elemente (104, 105) verankert sind.

7. Scharnier nach einem der Ansprüche 1 bis 5, **dadurch gekennzeichnet, dass** das langgestreckte Bauteil (109) ein Strang oder ein Rohr ist, der bzw. das aus einem biegsamen, nichtelastischen Material besteht, dem mindestens ein elastisches Teil (26) zugeordnet ist, und dass der Strang oder das Rohr durch Blockierteile (24, 38) blockiert ist, die jeweils in jedem der starren Elemente (104, 105) vorgesehen sind.

8. Scharnier nach einem der vorhergehenden Ansprüche, **dadurch gekennzeichnet, dass** die starren Elemente (104, 105) durch eine mechanische, elektrische, hydraulische, pneumatische oder optische Verbindung verbunden sind.

9. Scharnier nach einem der vorhergehenden Ansprüche, **dadurch gekennzeichnet, dass** die starren Elemente (104, 105) jeweils einen integrierenden Bestandteil eines Brillenbügels oder einer Brillengestellseite bilden.

10. Scharnier nach einem der Ansprüche 1 bis 8, **dadurch gekennzeichnet, dass** die starren Elemente (104, 105) jeweils einen integrierende Bestandteil einer Tür oder eines Türrahmens einer Fahrzeugkarosserie bilden.

11. Brillengestell, dem ein Scharnier nach einem der Ansprüche 1 bis 9 eingegliedert ist.
